# EUROPEAN PATENT APPLICATION

(11) **EP 4 803 951 A1**
(43) Date of publication of application: **09.09.2026**
(21) Application number: 24884895.4
(22) Date of filing: 31.10.2024
(51) Int. Cl.: G02B 27/01

(54) **WEARABLE DISPLAY DEVICE AND HOST DEVICE**

(30) Priority: 31.10.2023 CN 202311445184
(71) Applicant: Hangzhou Lingban Technology Co., Ltd., Hangzhou, Zhejiang 310000 (CN)
(72) Inventor: HOU, Guoliang, Hangzhou, Zhejiang 310000 (CN); MA, Chao, Hangzhou, Zhejiang 310000 (CN); ZHOU, Mengjiao, Hangzhou, Zhejiang 310000 (CN)
(74) Representative: Huang, Liwei
(86) International application number: PCT/CN2024/128860
(87) International publication number: WO 2025/092895

(57) **Abstract**

This application discloses a wearable display device and a host device. The wearable display device includes a wearable body, the wearable body is integrated with a processing unit, the wearable body has a display interface and a display unit, and the processing unit is connected to the display unit through the display interface. The processing unit is configured to: when the wearable display device is connected to the host device through the display interface, perform communication interaction in accordance with a DisplayPort Alternate Mode protocol with the host device, determine a target display format of the wearable display device, and light up the display unit based on the target display format.

## Description

### CROSS-REFERENCE TO RELATED APPLICATIONS

This application claims priority to Chinese patent application No. 202311445184.8, with the China National Intellectual Property Administration on October 31, 2023, which is incorporated herein by reference in its entirety.

### TECHNICAL FIELD

This application relates to the field of artificial intelligence technologies, and in particular to a wearable display device and a host device.

### BACKGROUND

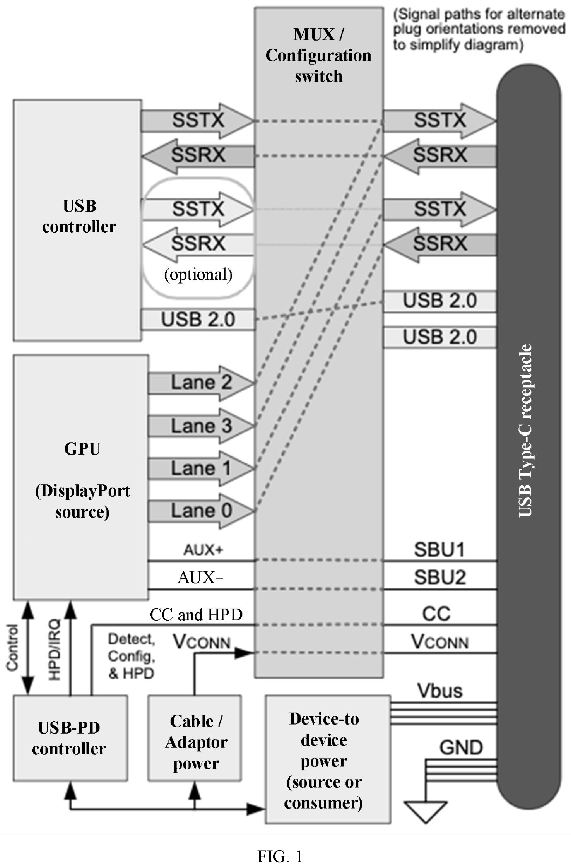

The essence of a multi-functional Type-C host interface is to configure a line of a USB (Universal Serial Bus, universal serial bus) interface and a line of a DP (DisplayPort, display port) in a same Type-C interface. To flexibly invoke interfaces and avoid reverse plugging of Type-C, a multiplexer (multiplexer, MUX for short below) is usually added to the interface to arrange physical lines of USB and DP signals in the Type-C interface. As shown in FIG. 1, a USB-PD controller (USB Power Delivery Controller, USB power management controller, which is briefly referred to as a USB-PD controller) may be added to control MUX (Multiplexer, multiplexer). In addition, the USB-PD controller may communicate with a PD controller of a downstream wearable display device such as AR glasses. After the two PD controllers perform acknowledgment through communication, a DisplayPort Alternate Mode acknowledged through communication may control MUX to configure an order of output lines.

Currently, most wearable display devices such as AR glasses use multi-functional Type-C interfaces to be connected with host devices. After the wearable display device is connected to different hosts such as mobile phones, Rokid Station, and laptop computers, the wearable display device is configured to be in a default display format. The host outputs corresponding images to the wearable display device based on the default display format. If it is necessary to switch to another display format, this needs to be achieved by sending commands or through manual configurations on the wearable display device. A screen light-up delay of the wearable display device is more than 6 seconds, which significantly increases the display light-up delay and system complexity, thereby affecting user experience.

### SUMMARY

Embodiments of this application provide a wearable display device and a host device to resolve the foregoing problems existing in the conventional technology.

According to a first aspect of this application, a wearable display device is provided. The wearable display device includes a wearable body, the wearable body is integrated with a processing unit, the wearable body has a display interface and a display unit, the display unit includes two display screens respectively corresponding to a left eye and a right eye of a user, and the processing unit is separately connected to the display interface and the display unit; and the processing unit is configured to: when a power supply connection is generated after the wearable display device is connected to a host device through the display interface, and before the display unit is lit up, perform communication interaction in accordance with a DisplayPort Alternate Mode protocol with the host device, determine a target display format of the wearable display device, and light up the display unit based on the target display format.

According to an implementation of this application, the processing unit includes: a parameter determining module, configured to: perform communication interaction in accordance with the DisplayPort Alternate Mode protocol with the host device, and determine the target display format of the wearable display device, where the target display format includes a plurality of display parameters; an interface training module, configured to perform display interface training with the host device; and a light-up module, configured to light up the display unit based on the target display format after the display interface training is completed.

According to an implementation of this application, the parameter determining module is further configured to determine an operating mode of the wearable display device; and correspondingly, the parameter determining module includes: a first receiving submodule, configured to receive a mode discovery command sent by the host device; and a first sending submodule, configured to send a mode acknowledgment instruction to the host device, where the mode acknowledgment instruction carries a plurality of operating modes supported by the wearable display device.

According to an implementation of this application, the parameter determining module further includes: a second receiving submodule, configured to: before the mode discovery command sent by the host device is received, receive an attribute discovery command sent by the host device; and a second sending submodule, configured to send an attribute acknowledgment instruction to the host device, where the attribute acknowledgment instruction carries an attribute of the wearable display device.

According to an implementation of this application, the parameter determining module further includes: a third receiving submodule, configured to: before the attribute acknowledgment instruction is sent to the host device, receive an identity discovery command sent by the host device; and a third sending submodule, configured to send an identity acknowledgment instruction to the host device.

According to an implementation of this application, the parameter determining module further includes: a fourth receiving submodule, configured to: after the mode acknowledgment instruction is sent to the host device, receive a mode entry command sent by the host device, where the mode entry command carries an operating mode specified by the host device for the wearable display device to enter; a fourth sending submodule, configured to send a mode entry acknowledgment instruction to the host device; a fifth receiving submodule, configured to: after the mode entry acknowledgment instruction is sent to the host device, receive a display interface capability message sent by the host device; and a fifth sending submodule, configured to send a display acknowledgment instruction to the host device, where sending of the display acknowledgment instruction indicates that the communication interaction in accordance with the DisplayPort Alternate Mode protocol is completed.

According to an implementation of this application, the interface training module includes: an attention submodule, configured to: when the communication interaction in accordance with the DisplayPort Alternate Mode protocol is completed, send an attention message to the host device; and a training submodule, configured to perform display interface training with the host device when the host device completes reading of extended display identification data of the wearable display device in response to the attention message.

According to an implementation of this application, the wearable display device is AR glasses.

According to an implementation of this application, the wearable body includes a frame and/or a temple; the processing unit is integrated in the frame or the temple; the display interface is configured at a tip of the temple; and the display unit is configured in the frame.

According to a second aspect of this application, a host device is further provided. The host device is connected to a wearable display device through a display interface of the wearable display device, the wearable display device is further configured with a processing unit and a display unit, and the display unit includes two display screens respectively corresponding to a left eye and a right eye of a user; and the host device is configured to: when a power supply connection is generated after the wearable display device is connected to the host device through the display interface, and before the display unit is lit up, perform communication interaction in accordance with a DisplayPort Alternate Mode protocol with the wearable display device, and determine a target display format of the wearable display device.

According to the wearable display device and the host device in the embodiments of this application, the wearable display device includes the wearable body, the wearable body is integrated with the processing unit, the wearable body has the display interface and the display unit, and the processing unit is separately connected to the display interface and the display unit. The processing unit is configured to: when the wearable display device is connected to the host device through the display interface, perform communication interaction with the host device in accordance with the DisplayPort Alternate Mode protocol, determine a target display configuration of the wearable display device, and light up the display unit based on the target display configuration. Therefore, the processing unit of the wearable display device can define different target display configurations according to a requirement of the host device. For example, a resolution format is initialized. A resolution format of glasses is configured in an initialization phase, so that the wearable display device can be lit up in a target display resolution format at a fastest speed, which effectively shortens a light-up time of the wearable display device and significantly improves user experience.

It should be understood that the teachings of this application do not need to achieve all the beneficial effects described above, but specific technical solutions can achieve specific technical effects, and other implementations of this application can also achieve beneficial effects not mentioned above.

### BRIEF DESCRIPTION OF DRAWINGS

Through reading of the following detailed descriptions with reference to the accompanying drawings, the foregoing and other objectives, features, and advantages of example implementations of this application will become readily understood. In the accompanying drawings, several implementations of this application are shown by way of example rather than limitation, in which:

In the accompanying drawings, same or corresponding reference numerals represent a same part or corresponding parts.
FIG. 1 is a schematic diagram of a circuit principle of adding a power management controller to control a display interface in a conventional technology;
FIG. 2 is a schematic diagram of a composition structure of a wearable display device according to an embodiment of this application;
FIG. 3 is a schematic diagram of a VDO field in an Enter Mode command according to an embodiment of this application;
FIG. 4 is a schematic diagram of an implementation procedure of a parameter configuration of a wearable display device according to an embodiment of this application; and
FIG. 5 is a schematic diagram of a comparison result between a light-up time of a wearable display device in an embodiment of this application and a light-up time of a wearable display device in a conventional technology.

### DETAILED DESCRIPTION OF THE EMBODIMENTS

The principles and spirit of this application will be described below with reference to several example implementations. It should be understood that these implementations are provided merely to enable a person skilled in the art to better understand and implement this application, and are not intended to limit the scope of this application in any way. On the contrary, these implementations are provided to make this application more thorough and complete, and to fully convey the scope of this application to a person skilled in the art.

The following further describes technical solutions of this application in detail with reference to the accompanying drawings and specific embodiments.

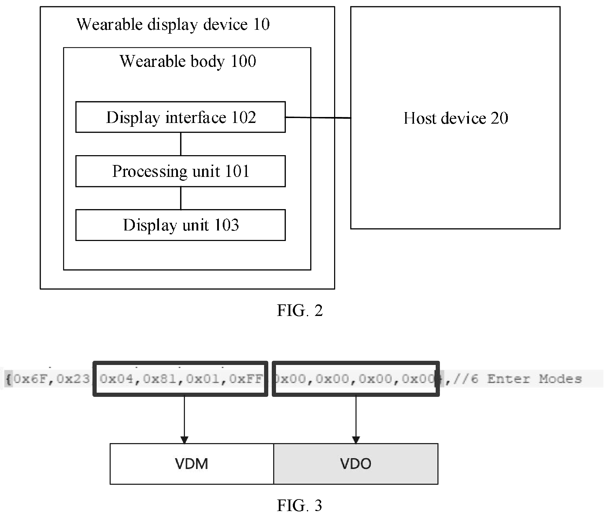

FIG. 2 is a schematic diagram of a composition structure of a wearable display device according to an embodiment of this application.

As shown in FIG. 2, in this embodiment of this application, a wearable display device 10 may include a wearable body 100, the wearable body 100 is integrated with a processing unit 101, the wearable body 100 has a display interface 102 and a display unit 103, the display unit 103 includes two display screens (not shown in the figure) respectively corresponding to a left eye and a right eye of a user, and the processing unit 101 is separately connected to the display interface 102 and the display unit 103. The processing unit 101 is configured to: when a power supply connection is generated after the wearable display device 10 is connected to a host device 20 through the display interface 102, and before the display unit 103 is lit up, perform communication interaction in accordance with a DisplayPort Alternate Mode protocol with the host device 20, determine a target display format of the wearable display device 10, and light up the display unit 103 based on the target display format.

It should be noted that, that the power supply connection is generated after the wearable display device 10 is connected to the host device 20 through the display interface 102 means that after the wearable display device 10 is plugged into the host device through the display interface 102, a connection needs to be established based on a PD (Power Delivery, power delivery) protocol, and then the host device 20 supplies power to the wearable display device 10.

In an embodiment of this application, if the wearable display device 10 and the host device 20 do not successfully interact, the display unit 103 of the wearable display device 10 is lit up based on a default display format.

The foregoing unsuccessful interaction means that after either the wearable display device 10 or the host device 20 sends information to the other, no message is received from the other within a specified time. Herein, the specified time may be set according to an actual requirement, and this application does not make specific requirements for this.

In an embodiment of this application, the display format may be understood as a combination of a plurality of display parameters such as a resolution and a refresh rate (Refresh Rate). Types of display parameters included in different display formats may be the same or different, and values of a same display parameter in different display formats may be the same or different. The resolution and the refresh rate are taken as examples. The default display format may include a resolution of 1920x1080 and a refresh rate of 60 Hz, and the target display format may include a resolution of 3840*1080 and a refresh rate of 120 Hz. This is merely an example, and this is not limited in this application.

In an implementation of this application, the wearable display device 10 may be AR (Augmented Reality, augmented reality) glasses. The display interface 102 may be a multi-functional Type-C interface.

In an implementation of this application, when the wearable display device 10 is AR glasses, the wearable body 100 may further include a frame (not shown in the figure) and a temple (not shown in the figure). The processing unit 101 may be integrated in the frame or the temple; the display interface 102 may be configured at a tip of the temple; and the display unit 103 may be configured in the frame.

In the conventional technology, after the host device and the wearable display device are connected, display parameters such as the resolution and the refresh rate of the wearable display device are initialized based on the default display format, and then the host device and the wearable display device are trained. In this embodiment of this application, based on a characteristic that resolutions of pictures or videos output by different host devices are different, the following is proposed: The wearable display device and the host device perform information exchange in accordance with the DisplayPort Alternate Mode protocol to determine the target display format of the wearable display device. For example, if the host device is a max pro host device developed by a specified manufacturer, after the host device is connected to the wearable display device, the target display format of the wearable display device may be set to 3840x1200@90 Hz (that is, the resolution is 3840x120 and the refresh rate is 90 Hz); or if the host device is a smartphone terminal, after the smartphone terminal is connected to the wearable display device, the target display format of the wearable display device may be set to 1920x1080@60 Hz (that is, the resolution is 1920x1080 and the refresh rate is 60 Hz).

In an implementation of this application, the processing unit 101 includes a parameter determining module (not shown in the figure), an interface training module (not shown in the figure), and a light-up module (not shown in the figure). The parameter determining module is configured to: perform communication interaction in accordance with the DisplayPort Alternate Mode protocol with the host device 20, and determine the target display format of the wearable display device 10. The interface training module is configured to perform training of the display interface 102 with the host device 20; and the light-up module is configured to light up the display unit 103 based on the target display format after training of the display interface 102 is completed.

It should be noted that, in this application, the processing unit 101 may be newly added hardware in the wearable display device, or functions of the processing unit 101 in this application may be configured in existing hardware of the wearable display device. In addition, in the following module configuration for the processing unit 101, a plurality of modules included in the processing unit 101 may be independently configured data processing chips, or a plurality of modules may be all configured in a same data processing chip.

In an implementation of this application, the parameter determining module is further configured to determine an operating mode of the wearable display device 10. Correspondingly, the parameter determining module includes a first receiving submodule and a first sending submodule. The first receiving submodule is configured to receive a mode discovery (Discover Modes) command sent by the host device 20. The first sending submodule is configured to send a mode acknowledgment instruction (Discover Modes Ack) to the host device 20. The mode acknowledgment instruction carries a plurality of operating modes supported by the wearable display device 10.

For example, the operating modes may include a standard mode and a custom mode. The standard mode is an operating mode entered by the display interface 102 after the wearable display device 10 is initialized, for example, a USB mode. The custom mode may be indicated as 0xff01 in Discover Modes Ack, indicating Mode #1 (operating mode 1), specifically, indicating that the display interface 102 of the wearable display device supports a Display Port mode.

In an implementation of this application, the parameter determining module further includes a second receiving submodule and a second sending submodule. The second receiving submodule is configured to: before the mode discovery command sent by the host device 20 is received, receive an attribute discovery command sent by the host device 20. The second sending submodule is configured to send an attribute acknowledgment instruction to the host device 20. The attribute acknowledgment instruction carries an attribute of the wearable display device 10.

For example, the attribute herein may include information such as a device identity or a device code of the wearable display device 10. For example, the attribute discovery command may be Discover Identity, and correspondingly, the attribute acknowledgment instruction may be Discover Identity Ack.

In an implementation of this application, the parameter determining module further includes: a third receiving submodule, configured to: before the attribute acknowledgment instruction is sent to the host device 20, receive an identity discovery command sent by the host device 20; and a third sending submodule, configured to send an identity acknowledgment instruction to the host device 20. The identity discovery command is used to specify an operating mode for the wearable display device 10, and may carry Standard ID (standard ID) or Vendor IDs. The standard ID may be represented by 0xff00, representing a standard mode (for example, USB), and Vendor IDs may be represented by 0xff01, representing a custom mode (for example, a Display Port mode).

For example, the identity discovery command may be Discover SVIDs (Discover Standard or Vendor IDs, Discover Standard or Vendor IDs), and correspondingly, the identity acknowledgment instruction may be Discover SVIDs Ack.

In an implementation of this application, the parameter determining module further includes a fourth receiving submodule, a fourth sending submodule, a fifth receiving submodule, and a fifth sending submodule. The fourth receiving submodule is configured to: after the mode acknowledgment instruction is sent to the host device 20, receive a mode entry command sent by the host device 20. The mode entry command carries an operating mode specified by the host device 20 for the wearable display device 10 to enter. The fourth sending submodule is configured to send a mode entry acknowledgment instruction to the host device 20. The fifth receiving submodule is configured to: after the mode entry acknowledgment instruction is sent to the host device 20, receive a display interface capability message sent by the host device 20. The fifth sending submodule is configured to send a display acknowledgment instruction to the host device 20. Sending of the display acknowledgment instruction indicates that the communication interaction in accordance with the DisplayPort Alternate Mode protocol is completed.

For example, after the wearable display device 10 sends Discover Modes ACK to the host device 20, the host device 20 may send a mode entry (Enter Mode) command to the wearable display device 10. Because the host device 20 has sent an identity (Standard ID or Vendor IDs) of an operating mode to the wearable display device 10 through Discover SVIDs before receiving Discover Modes ACK, which is equivalent to that the operating mode is specified, herein, when the host device 20 sends the Enter Mode command, the Enter Mode command may be used to require the wearable display device 10 to enter the operating mode specified by Discover SVIDs command. Operating modes herein have same meanings as the forgoing operating modes, and may also include a standard mode and a custom mode. The standard mode may be indicated as 0xff00 in information exchanged between the host device 20 and the wearable display device 10, and the custom mode may be indicated as 0xff01 in the information exchanged between the host device and the wearable display device, which may also be defined according to an actual requirement.

In an implementation of this application, before the host device 20 reads an EDID (Extended Display Identification Data, extended display identification data) parameter of the wearable display device 10, display parameters (for example, the target display format) such as a resolution and a refresh rate that are supported by the host device 20 are sent to the wearable display device 10. When the host device 20 sends the mode entry (Enter Mode) command to the wearable display device 10, the target display format is added to the Enter Mode command. The wearable display device 10 generates, based on the target display format, corresponding EDID information for the host device 20 to read. The EDID information may include the target display format (the resolution, the refresh rate, and the like), and may further include performance parameters of the display unit 103 of the wearable display device 10 such as vendor information, a maximum image size, a color setting, a manufacturer presetting, a frequency range limitation, and strings for a display name and a serial number.

Herein, as shown in FIG. 3, the target display format may be transmitted by adding a VDO field to the Enter Mode command. Specifically, for a definition of the VDO (Vendor Defined Data Object, vendor defined data object) field added to the Enter Mode command, refer to Table 1.

**Table 1 Example of a VDO field**

| VDO | Description | Specific description |
|---|---|---|
| Bit 31:8 | Vendor identity field Rokid: 5a5a5a | Bit [31:8] is a protocol check code. After a check is passed, a peer device configures a display format based on bit [7:0]. |
| Bit 7:4 | Reserved | Reserved field |
| Bit 3:0 | Display format | 0h: 1920x1080@60 Hz |
| | | 1h: 3840x1080@60 Hz |
| | | 2h: Reserved |
| | | 3h: 1920x1200@60 Hz |
| | | 4h: 3840x1200@90 Hz |
| | | 5h: 3840x1200@60 Hz |
| | | 6h: 1920x1080@120 Hz VESA |

In an implementation of this application, the display interface capability message can indicate whether the host device 20 is a receiver or a sender, whether the host device 20 supports USB 2.0, a supported Type-C pin assignment manner, and the like. Herein, the display interface capability message may be a DP Configure (Display Port Configure) message. Correspondingly, the display acknowledgment command may be DP Configure Ack.

In an implementation of this application, the interface training module may include an attention submodule and a training submodule. When the communication interaction in accordance with the DisplayPort Alternate Mode protocol is completed, the attention submodule sends an attention message to the host device 20. The training submodule is configured to perform display interface training with the host device 20 when the host device 20 completes reading of EDID of the wearable display device 10 in response to the attention message.

For example, after the processing unit 101 of the wearable display device 10 performs a series of operations of the submodules of the parameter determining module (that is, after the host device 20 receives DP Configure Ack), a display parameter configuration of the wearable display device is completed. In this case, the wearable display device 10 may send Attention (attention message) to the host device 20. Attention may include information such as HPD (Hot plug Detect, which is a hot plug detection status), which is used to declare, to the host device 20, that the wearable display device 10 has completed the display parameter configuration (that is, the target display format has been determined). The host device 20 may read information such as the EDID of the wearable display device 10 in response to the attention message, and perform Display Port training with the wearable display device 10.

In an embodiment of this application, before lighting up the display unit 103 of the wearable display device 10, the host device 20 performs Display Port training with the wearable display device 10. After Display Port training succeeds, the host device 20 needs to read the EDID information of the display unit 103 of the wearable display device 10 through AUX (Auxiliary, audio and video interface), including content such as the target display format, and send data that needs to be displayed by the display unit 103 to the display unit 103 through AUX.

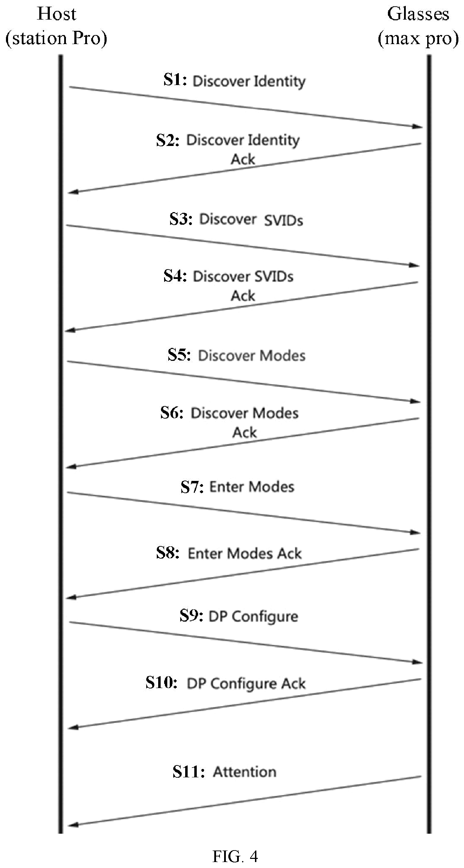

It should be noted that the foregoing is merely an example description of this application, and the modules of the processing unit 101 may alternatively be obtained through division according to an actual requirement, as long as corresponding operations can be performed to achieve corresponding functions. Specifically, the processing unit 101 may be properly divided into functional modules with reference to a display parameter configuration procedure of the wearable display device shown in FIG. 4, and functions obtained through division are configured in one or more chips.

As shown in FIG. 4, in this embodiment of this application, the wearable display device is AR glasses, and the display parameter configuration of the wearable display device may include at least the following operation procedure.

Operation S1: The host device (station Pro) sends Discover Identity to the AR glasses (max pro).

Operation S2: The AR glasses send Discover Identity Ack to the host device.

Operation S3: The host device sends Discover CVIDs to the AR glasses. It should be noted that the host device may send Discover CVIDs before receiving Discover Identity Ack in Operation S2.

Operation S4: The AR glasses send Discover SVIDs Ack to the host device.

Operation S5: The host device sends Discover Modes to the AR glasses.

Operation S6: The AR glasses send Discover Modes Ack to the host device.

Operation S7: The host device sends Enter Modes to the AR glasses.

Operation S8: The AR glasses send Enter Modes Ack to the host device.

Operation S9: The host device sends a DP Configure (display interface configuration) command to the AR glasses.

Operation S10: The AR glasses send DP Configure Ack (display interface configuration acknowledgment) command to the host device. In this way, the communication interaction in accordance with the DisplayPort Alternate Mode protocol is completed.

Operation S11: The AR glasses send Attention to the host device.

It should be noted that, for specific implementation details of operations S1 to S11, refer to the functional description of the modules of the processing unit 101. Details are not described herein again.

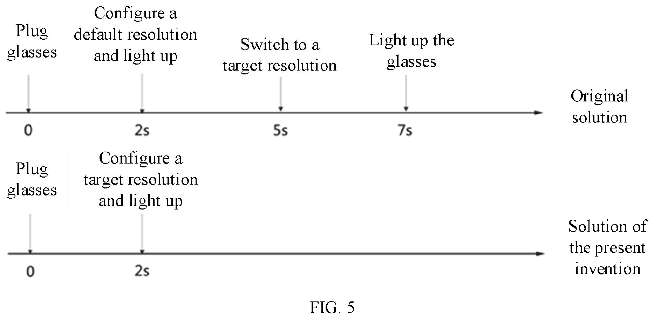

FIG. 5 is a schematic diagram of a comparison result between a light-up time of a wearable display device in an embodiment of this application and a light-up time of a wearable display device in a conventional technology. As shown in FIG. 5, the wearable display device may be AR glasses (briefly referred to as glasses in the figure). In this application, according to a requirement of the host device, the target display format, for example, the resolution and the refresh rate, of the wearable display device is flexibly defined in an initialization phase of the wearable display device. In this way, the wearable display device lights up a screen in the target display format at a fastest speed, which can shorten a light-up time of the wearable display device after the wearable display device is plugged into the host device from approximately 7s to 2s, significantly improving user experience.

According to the wearable display device and the host device in the embodiments of this application, the wearable display device includes the wearable body, the wearable body is integrated with the processing unit, the wearable body has the display interface and the display unit, and the processing unit is separately connected to the display interface and the display unit. The processing unit is configured to: when the wearable display device is connected to the host device through the display interface, perform communication interaction in accordance with a DisplayPort Alternate Mode protocol with the host device, determine a target display format of the wearable display device, and light up the display unit based on the target display format. In this way, the processing unit of the wearable display device can define different target display formats such as the resolution and/or the refresh rate according to the requirement of the host device. A target display format of the wearable display device is configured in the initialization phase, so that the wearable display device can light up the screen at the fastest speed, which effectively shortens a screen light-up time and significantly improves user experience.

Similarly, based on the foregoing wearable display device, an embodiment of this application further provides a host device. The host device is connected to a wearable display device through a display interface of the wearable display device, the wearable display device is further configured with a processing unit and a display unit, and the display unit includes two display screens respectively corresponding to a left eye and a right eye of a user; and the host device is configured to: when a power supply connection is generated after the wearable display device is connected to the host device through the display interface, and before the display unit is lit up, perform communication interaction in accordance with a DisplayPort Alternate Mode protocol with the wearable display device, and determine a target display format of the wearable display device.

It should be noted herein that the foregoing descriptions of the host device embodiment is similar to the descriptions of the wearable display device embodiment shown in FIG. 1 to FIG. 5. The wearable display device is a device that outputs audio and video data from the host device to a user. The host device has similar beneficial effects to the wearable display device embodiment shown in FIG. 1 to FIG. 5, and therefore, details are not described herein again. For technical details not disclosed in the host device embodiment of this application, refer to the descriptions of the wearable display device embodiment shown in FIG. 1 to FIG. 5 of this application for understanding, and therefore, details are not described herein again.

It should be noted that, in this specification, the terms "include", "comprise", or any other variation thereof are intended to cover a non-exclusive inclusion, such that a process, a method, an article, or an apparatus that includes a list of elements does not include only those elements, but may include other elements not explicitly listed or inherent to such a process, a method, an article, or an apparatus. Without more constraints, an element preceded by "includes a ..." does not preclude the existence of additional identical elements in the process, method, article, or apparatus that includes the element.

In the several embodiments provided in this application, it should be understood that the disclosed devices and methods can be implemented in other manners. For example, the described device embodiment is merely an example. For example, division into units is merely logical function division and may be other division in actual implementation. For example, a plurality of units or components may be combined or integrated into another system, or some features may be ignored or not performed. In addition, the displayed or discussed mutual couplings, direct couplings, or communication connections between components may be implemented through some interfaces. The indirect couplings or communication connections between the devices or units may be in electronic, mechanical, or other forms.

The units described as separate parts may or may not be physically separate, and parts displayed as units may or may not be physical units, in other words, may be located at one location, or may be distributed on a plurality of network units. Some or all of the units may be selected according to an actual requirement to achieve the objectives of the solutions of the embodiments.

In addition, in the embodiments of this application, functional units may be integrated into one processing unit, or each unit may be separately used as a unit, or two or more units may be integrated into one unit. The integrated unit may be implemented in a form of hardware, or in a form of hardware plus software functional units.

A person skilled in the art can understand that all or some of the steps of the foregoing method embodiments may be completed by hardware related to program instructions, and the foregoing program may be stored in a computer-readable storage medium. When the program is executed, the steps including the foregoing method embodiments are performed. In addition, the foregoing storage medium includes a mobile storage device, a read only memory (Read Only Memory, ROM), a magnetic disk, an optical disk, and various other media that can store program code.

Alternatively, if the integrated unit in this application is implemented in a form of a software functional module and sold or used as an independent product, the integrated unit may be stored in a computer-readable storage medium. Based on such an understanding, the technical solutions in the embodiments of this application essentially, or the part contributing to the conventional technology may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes various media such as a removable storage device, a ROM, a magnetic disk, or an optical disc, that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wearable display device, wherein the wearable display device comprises a wearable body, the wearable body is integrated with a processing unit, the wearable body has a display interface and a display unit, the display unit comprises two display screens respectively corresponding to a left eye and a right eye of a user, the processing unit is connected to the display interface, and the processing unit is connected to the display unit; and
after the wearable display device is connected to a host device through the display interface for power supply connection, and before the display unit is lit up, the processing unit is configured to perform communication interaction with the host device in accordance with a DisplayPort Alternate Mode protocol, to determine a target display format of the wearable display device, and to light up the display unit based on the target display format.

2. The wearable display device according to claim 1, wherein the processing unit comprises:
a parameter determining module, configured to perform communication interaction with the host device in accordance with the DisplayPort Alternate Mode protocol, and determine the target display format of the wearable display device, wherein the target display format comprises a plurality of display parameters;
an interface training module, configured to perform display interface training with the host device; and
a light-up module, configured to light up the display unit based on the target display format after the display interface training is completed.

3. The wearable display device according to claim 2, wherein the parameter determining module is further configured to determine an operating mode of the wearable display device; and
the parameter determining module comprises:
a first receiving submodule, configured to receive a mode discovery command sent by the host device; and
a first sending submodule, configured to send a mode acknowledgment instruction to the host device, wherein the mode acknowledgment instruction carries a plurality of operating modes supported by the wearable display device.

4. The wearable display device according to claim 3, wherein the parameter determining module further comprises:
a second receiving submodule, configured to receive an attribute discovery command sent by the host device before the mode discovery command sent by the host device is received ; and
a second sending submodule, configured to send an attribute acknowledgment instruction to the host device, wherein the attribute acknowledgment instruction carries an attribute of the wearable display device.

5. The wearable display device according to claim 4, wherein the parameter determining module further comprises:
a third receiving submodule, configured to receive an identity discovery command sent by the host device before the attribute acknowledgment instruction is sent to the host device; and
a third sending submodule, configured to send an identity acknowledgment instruction to the host device.

6. The wearable display device according to claim 3, wherein the parameter determining module further comprises:
a fourth receiving submodule, configured to receive a mode entry command sent by the host device after the mode acknowledgment instruction is sent to the host device, wherein the mode entry command carries an operating mode specified by the host device for the wearable display device to enter;
a fourth sending submodule, configured to send a mode entry acknowledgment instruction to the host device;
a fifth receiving submodule, configured to receive a display interface capability message sent by the host device after the mode entry acknowledgment instruction is sent to the host device; and
a fifth sending submodule, configured to send a display acknowledgment instruction to the host device, wherein
the sending of the display acknowledgment instruction indicates that the communication interaction in accordance with the DisplayPort Alternate Mode protocol is completed.

7. The wearable display device according to claim 2, wherein the interface training module comprises:
an attention submodule, configured to send an attention message to the host device when the communication interaction in accordance with the DisplayPort Alternate Mode protocol is completed; and
a training submodule, configured to perform display interface training with the host device when the host device has read extended display identification data of the wearable display device in response to the attention message.

8. The wearable display device according to any one of claims 1 to 7, wherein the wearable display device is AR glasses.

9. The wearable display device according to claim 8, wherein
the wearable body comprises a frame and/or a temple;
the processing unit is integrated in the frame or the temple;
the display interface is arranged at an end tip of the temple; and
the display unit is arranged in the frame.

10. A host device, wherein the host device is connected to a wearable display device through a display interface of the wearable display device, the wearable display device is provided with a processing unit and a display unit, and the display unit comprises two display screens respectively corresponding to a left eye and a right eye of a user; and
after the wearable display device is connected to the host device through the display interface for power supply connection, and before the display unit is lit up, the host device is configured to perform communication interaction with the wearable display device in accordance with a DisplayPort Alternate Mode protocol, and determine a target display format of the wearable display device.
